# EUROPEAN PATENT APPLICATION

(11) **EP 3 978 996 A1**
(43) Date of publication of application: **06.04.2022**
(21) Application number: 20199295.5
(22) Date of filing: 30.09.2020
(51) Int. Cl.: G02F 1/39, H04B 10/70, H04L 9/08

(54) **OPTICAL TRANSMISSION SYSTEM**

(71) Applicant: FRAUNHOFER-GESELLSCHAFT zur Förderung der angewandten Forschung e.V., 80686 München (DE)
(72) Inventor: STEINLECHNER, Fabian, 07745 Jena (DE); Rieländer, Daniel, 07745 Jena (DE); Sharma, M.Sc., Sakshi, 07745 Jena (DE); Kr i , Andrej, 07745 Jena (DE)
(74) Representative: Wagner, Jürgen

(57) **Abstract**

It is claimed a optical transmission system (1), comprising an entangled photon source (2), a free-space receiver module (3), a fiber receiving module (4), a free-space channel (5) and a fiber channel (6), whereas the entangled photon source (2) generates entangled photon pairs comprising a signal photon and an idler photon, and whereas the entangled photon source (2) and the free-space receiving module (3) are connected via the free-space channel (5), and whereas the entangled photon source (2) and the fiber receiving module (4) are connected via the fiber channel (6), and whereas the signal photon is sent via the free-space channel (5) to the free-space receiving module (3) and the idler photon is sent via the fiber channel (6) to the fiber receiving module (4). The signal and idler photon of the entangled photon pair have non-degenerate wavelengths, a signal photon wavelength fₛ and an idler photon wavelength fᵢ, with fᵢ ≠ fₛ.

## Description

The present invention provides an optical transmission system according to the preamble of claim 1 and a method for optical transmission according to the preamble of claim 14.

Transmitting single photons or quantum states over long distances enables a multitude of applications, such as optical communication or the generation of a secure key for secure communication, called quantum key distribution (QKD). Quantum key distribution is a secure way sharing keys between two users by using entangled photons and the use of an entanglement-based protocol. Optical transmission or optical communication over a long distance is limited by losses in the transmission channel. This limit can be overcome in known systems by so called trusted nodes, with the disadvantage of adding an additional insecure layer due to the trusted nodes. Trusted means the necessity to trust among other things the function, operation, personnel, network and security. In the trusted node, the quantum signal is detected and converted to a classical signal, which adds the layer of security that must be taken into account. Single photons or quantum states are transmitted in known systems in a free-space network or a fiber network.

Optical free-space links allow the transmission of single photons or quantum states over longer distances compared to fiber-based communication networks. A variety of link configurations between satellites and ground stations are known, whereas in all known systems, the ground station acts as a trusted node for quantum key distribution, that means, in all known systems the quantum signal is detected directly at the ground station receiver and converted into a classical signal. For a commercial use for that system it would be necessary that each ground station is a controlled and secure area. In addition, optical ground stations for optical free-space links are not feasible for an optical communication network in a city due to their cost, sizes and the high background lights of the surrounding area.

The transmission of single photons or quantum states in a fiber network system is limited by the losses in the fiber. Without quantum repeaters the maximum useful transmission distance in standard single mode fibers is about 200 km. This limits the fiber-based quantum communication systems only to a metropolitan distance or required trusted nodes distributed along the transmission line.

It is an object of the present invention to provide a secure, improved, and cost-efficient transmission system for longer distances.

According to the present invention, an optical transmission system is provided according to claim 1.

This object is achieved by an optical transmission system, preferably for single photons or quantum states, comprising an entangled photon source, a free-space receiver module, a fiber receiving module, a free-space channel and a fiber channel, whereas the entangled photon source generates entangled photon pairs, and whereas each entangled photon pair comprises a signal photon and an idler photon, and whereas the entangled photon source and the free-space receiving module are connected via the free-space channel, and whereas the entangled photon source and the fiber receiving module are connected via the fiber channel, and whereas the signal photon is sent via the free-space channel from the entangled photon source to the free-space receiving module, and the idler photon is sent via the fiber channel from the entangled photon source to the fiber receiving module. According to the invention the signal and idler photon of the entangled photon pair have non-degenerate wavelengths, a signal photon wavelength fₛ and an idler photon wavelength fᵢ, with fᵢ ≠ fₛ.

The object is further achieved by a method for an optical transmission, preferably for transmission of single photons or quantum states, with the steps
i) generation of entangled photon pairs with an entangled photon source, whereas each entangled photon pair comprise a signal photon and an idler photon,
ii) guiding the signal photon via a free-space channel to a free-space receiving module, and guiding the idler photon via a fiber channel to a fiber receiving module,
iii) detection or storage of the signal photon in the free-space receiving module and detection or storage of the idler photon in the fiber receiving module. According to the invention the signal and idler photons in step i) of the entangled photon pair are generated with non-degenerate wavelengths, a signal photon wavelength fₛ and an idler photon wavelength fᵢ, with fᵢ ≠ fₛ.

The inventive system and method allow a direct optical transmission between the free-space receiver module and the fiber receiver module without a trusted node between the free-space channel and the fiber channel, coupling the free-space transmission with the fiber transmission. This is realized by the use of the entangled photon source between the free space channel and the fiber channel and the non-degenerated wavelengths of the signal and idler photons. The advantage of the invention is to overcome the transmission limit in fibers and to allow the transmission with a receiver in a residential area without the necessity of a trusted node.

In a preferred embodiment of the optical transmission system, the entangled photon source is an untrusted node, preferably for optical communication and/or quantum key distribution. In a preferred embodiment of the method the entangled photon source in step i) is an untrusted node.

In a preferred embodiment, the free-space channel and the fiber channel are linked via the untrusted node.

Trusted node means, that it is necessary to verify that the node can be trusted. That means among other things the function, operation, personnel, network and security have to be certified and/or verified. Untrusted node means, that it is not necessary to verify that the node can be trusted, meaning the node does not have to be trusted. In an untrusted node the link between the two communications channels has no information about the optical communication and/or quantum key distribution (QKD). That means the two receivers do not rely on any information of the link between the two communications to verify the establishment of a secure key generation.

The advantage of not using or relying on a trusted node is, that the transmission parties, meaning the free-space receiving module and the fiber receiving module, are able to verify between themselves that the key they have established is secure without relying on any other party, particularly without relying on the security of the trusted node. In the invention the untrusted node preferably is the link between the free space channel and the fiber channel, which has the advantage that the entangled photon source has no information about the optical communication and/or the quantum key distribution (QKD) between the two receivers, despite linking the free-space channel and the fiber channel.

Preferably fiber channel means here a communication channel in a medium guiding the photon, for example in a fiber or a waveguide. Preferably free-space channel means here a communication channel in a medium not guiding the photon, for example the atmosphere, or gas, or vacuum, or water.

Non-degenerate wavelength means that the signal photon wavelength fₛ and the idler photon wavelength fᵢ of the signal and idler photon of one entangled photon pair are different, meaning fᵢ ≠ fₛ.

In a preferred embodiment, the free-space receiving module and the fiber receiving module are spatially separated from the entangled photon source, preferably located outside the room and/or the building of the entangled photon source. Preferably spatially separated means separated by a range of 5 m to 10 m, preferably spatially separated by a range of 10 m to 2000 m, preferably spatially separated by more than 2000 m. Preferably the maximal separation distance is limited by the transmission loss in the fiber channel and/or by the transmission loss and/or the diffraction in the free-space channel, in order to establish an optical communication or to establish a quantum key distribution (QKD) between the two receivers.

In a preferred embodiment, the signal photon wavelength fₛ, preferably in nm, is shorter than the idler photon wavelength fᵢ, preferably in nm.

The advantage of the non-degenerate signal and idler wavelengths is, that the lower signal wavelength has lower diffraction and a smaller beam size in the distance in the free-space transmission, and space proofed single photon avalanche diode (SPAD) detectors can be used for the detection. The advantage of the longer idler wavelength is the lower transmission loss in the fiber or fiber network.

In a preferred embodiment, the optical transmission system is used for optical communication or quantum key distribution, preferably the optical transmission system is capable for optical communication or quantum key distribution (QKD).

In a preferred embodiment, the entangled photon pairs are used for a QKD (quantum key distribution), preferably to generate a key the free-space receiver module and the fiber receiving module.

In a preferred embodiment, entangled photon pairs are entangled in polarization, an/or time, and/or frequency, and/or orbital angular momentum (OAM) and/or spin angular momentum (SAM).

In a preferred embodiment, the free-space receiver module and/or the fiber receiving module communicates the time, and/or the frequency and/or the polarization, and/or the orbital angular momentum (OAM) and/or the spin angular momentum (SAM) of one or more detected photons to the entangled photon source and/or the free-space receiver module and/or the fiber receiving module and/or a coincidence module, in order to detect coincidences of an entangled photon pair between the free-space receiver module and the fiber receiving module and/or to calculate the visibility and/or the quantum bit error rate (QBER) and/or to establish a QKD (quantum key distribution).

In a preferred embodiment, the entangled photon source comprises a laser and a non-linear crystal, whereas the laser generates a pump beam, and whereas the non-linear crystal is pumped by the pump beam in order to produce entangled photon pairs.

In a preferred embodiment, the entangled photon pairs are generated by spontaneous parametric down conversion (SPDC), preferably in a second-order non-linear crystal or are generated by spontaneous four wave mixing (SFWM), preferably in a third order non-linear crystal.

In a preferred embodiment, the entangled photon source is a free-space source with free space components or a fiber source with in-fiber components. The advantage of a free-space source is the high production rate of entangled photon pairs. The advantage of a fiber source is that there is no loss due to the coupling of the entangled photons into a single mode fiber.

In a preferred embodiment, the nonlinear crystal is a Potassium Titanyl Phosphate (KTP) crystal or a periodically poled Potassium Titanyl Phosphate (ppKTP) crystal or a Lithium Niobate (LN) crystal or a periodically poled Lithium Niobate (ppNL) crystal.

In a preferred embodiment, entangled photons are generated by the non-linear crystal in natural phase matching conditions, or quasi-phase-matching condition, or birefringent phase matching. Phase-matching describes the wavelength of the signal and idler photon as a function of the non-linear medium, the pump beam wavelength and the desired signal and idler wavelengths. To generate signal and idler photon with different wavelength the pump beam and the nonlinear medium have to be chosen in dependence on the desired signal and idler photon wavelength. In a preferred embodiment the non-linear crystal meets the natural phase matching conditions or quasi-phase-matching condition, or birefringent phase matching, in order to generate the signal and idler photon with non-degenerate wavelengths, a signal photon wavelength fₛ and an idler photon wavelength fᵢ, with fᵢ ≠ fₛ.

Natural phase matching condition describing a material without poling period. Quasi-phase-matching condition describing a material with poling period, whereas poling period means the modulation of the crystal-non-linearity with the period p. By the phase-matching of the nonlinear crystal the signal photon wavelength fₛ and an idler photon wavelength fᵢ can be adjusted in the photon generation process. Non-linear crystals with modulated quadratic non-linear coefficients X⁽²⁾ are called quasi-phase-matching materials.

In a preferred embodiment, the entangled photon source generates collinear or non-collinear photon pairs. Preferably the entangled photon source generates type 0 (HH), or type I (VV), or type II (HV) photon pairs. Whereas the letters in the brackets describe the polarization of the signal and idler photon with H as horizontal polarization and V as vertical polarization.

In a preferred embodiment, the pump beam is in the range of 380nm to 430nm or 500nm to 550nm, preferably the pump beam is a pulsed or a continuous wave (CW) beam, preferably a pulsed or a continuous wave (CW) laser beam.

In a preferred embodiment, the signal photon wavelength fₛ is in the range of 450 nm to 1060 nm. The advantage of these range is the commercially available detectors with high detection efficiency.

In a preferred embodiment, the signal photon wavelength fₛ is in the range of 950 nm to 1650 nm. The advantage of this range is the commercially available detectors. In addition, this range has the advantage that the transmission in the atmosphere is high and the turbulence losses of the atmosphere are reduced.

The advantage of the signal photon in the signal photon wavelength range is, that the photon is in a high transmission band of the atmosphere and the detection range of single photon detectors. In addition, the lower signal wavelength has lower diffraction and a smaller beam size in the distance in the free-space transmission. The advantage of the idler photon in the idler photon wavelength range is that the photon is in a high transmission band of the fiber.

In a preferred embodiment, the signal photon wavelength fₛ is in the range of 3 µm to 4 µm. The advantage of this range is the high transmission through clouds in the atmosphere and the low

In a preferred embodiment, the signal photon wavelength fₛ is in the range of 500 nm to 600 nm, preferably 500 nm to 560 nm. The advantage of this range is that detectors with high detection efficiency and a high time resolution are available. For this range CMOS Sensors (Complementary metal-oxide-semiconductor) and avalanche-Photodiodes (APD) can be used and have a high detection efficiency and are developed for space application, meaning the avalanche-Photodiodes (APD) are space proofed. In a preferred embodiment, the signal photon wavelength fₛ is in the range of 500 nm to 560 nm. The advantage of this range is the low diffraction for long free-space transmission channels.

In a preferred embodiment, the signal photon wavelength fₛ is in the range of 660 nm to 690 nm, or in the range of 770 nm to 790 nm, or in the range of 1000 nm to 1070 nm or in the range of 1540 nm to 1680 nm. The advantage of these ranges is the high transmission in the atmosphere. Besides the high transmission in the atmosphere wavelength the range of 770 nm to 790 nm can be used for rubidium quantum memories. In addition, the ranges above 700 nm have the advantage that the Solar irradiance is lower, introducing less unwanted photons in the wavelength of the optical communication.

In a preferred embodiment, the signal photon wavelength fₛ is in the range of 530 nm to 650 nm. The advantage of this wavelength is the use for a quantum memory in a diamante.

In a preferred embodiment, the signal photon wavelength fₛ is in the range of 1040 nm to 1070 nm. The advantage of this range is that the laser communication in satellite is designed for these wavelengths.
In a preferred embodiment, the idler photon wavelength is in the range of 1200nm to 1700nm.

In a preferred embodiment, the idler photon wavelength is in the optical telecom wavelength band, preferably in the original band (O-band) 1260 nm - 1360 nm, or in the extended band (E-band) 1360 nm - 1460 nm, or in the short band (S-band) 1460 nm - 1530 nm, or in the conventional band (C-band) 1530 nm - 1565 nm, or in the long band (L-band) 1565 nm - 1625 nm, or in the ultralong band (U-band) 1625 nm - 1675 nm.

In a preferred embodiment, the signal photon wavelength is chosen depending on the beam width on the satellite and/or the transmission in the atmosphere, and/or the attenuation caused by the atmosphere absorption, and/or scattering and/or turbulences or by the weather conditions, and/or the noise of light sources (sun or moon or terrestrial light sources), and/or the detection efficiency of the used detectors. Preferably the idler photon wavelength is chosen depending on the transmission in the fiber and/or multiplexing components in a fiber network, and/or the detection efficiency.

In the following, non-exclusive examples for the entangled photon source and the signal and idler wavelengths are given:
In a first example the entangled photon pairs can be generated by a pump beam with 405 nm ±10 nm, with spontaneous parametric down conversion in a collinear type-II natural phase matching condition in a Potassium Titanyl Phosphate (KTP) crystal, generating signal photons with a signal photon wavelength of 532 nm ± 20 nm and idler photons with an idler photon wavelength of 1550 nm ± 50 nm.

In a second example the entangled photon pairs can be generated by a pump beam with 532 nm ± 10 nm, with spontaneous parametric down conversion in a collinear type-0 quasi-phase matching condition in a periodically poled Potassium Titanyl Phosphate (KTP) or Lithium Niobate (LN) crystal, generating signal photons with a signal photon wavelength of 810 nm ± 20 nm and idler photons with an idler photon wavelength of 1550 nm ± 50 nm.

In a third example the entangled photon pairs can be generated by a pump beam with 519 nm or 524,5 nm, with spontaneous parametric down conversion in a collinear type-0 quasi-phase matching condition in a periodically poled Potassium Titanyl Phosphate (KTP) or Lithium Niobate (LN) crystal, generating signal photons with a signal photon wavelength of 780.24 nm and idler photons with an idler photon wavelength of 1550 nm.

In a preferred embodiment, the entangled photon source is arranged in an optical ground station, preferably with a direct access to a telescope and/or a fiber and/or a fiber network. Preferably the optical ground station is a building or an item or a vehicle with the possibility for an optical free space communication, for example by a telescope and/or a lens, and/or a lens system.

In a preferred embodiment, the entangled photon source is arranged in a room or a building as an untrusted node. The entangled photon source has access to or is connected to the beginning of the free-space channel and the beginning of the fiber channel, whereas the free-space channel and the fiber channel connect the fiber receiver and the free-space receiver with the entangled photon source, and whereas the fiber receiver and the free-space receiver are located outside the untrusted node, meaning outside the room or building of the entangled photon source.

In a preferred embodiment, the free-space receiving module is an end-user for optical communication and/or QKD (quantum key distribution), preferably is arranged on a satellite, preferably in geostationary orbit or low earth orbit or mid earth orbit, or is arranged on the moon, or is arranged on a second terrestrial optical ground station.

In a preferred embodiment, the free-space receiving module is a static receiver or a receiver in motion, preferably on a satellite or a movable second ground station.

Preferably the free-space receiving module comprise optical free-space components and/or optical fiber components, in order to receive, guide and/or to detect the photon.

In a preferred embodiment, the free-space receiving module comprises one or more detection means, and/or a storage means.

In a preferred embodiment, the detection means of the free-space receiving module comprise one or more detectors to measure the photons in at least two mutually unbiased measurement bases, and/or to measure the photons in at least one or more orthogonal states.

In a preferred embodiment, the one or more detectors of the free-space receiving module are single photon detectors, preferably germanium (Ge), or silicon (Si), or germanium on silicon (Ge on Si) single-photon avalanche diode (SPAD), or Indium gallium arsenide (InGaAs/Inp) single photon detectors, or semiconductor-based single-photon avalanche diode (SPAD), or superconducting nanowire single-photon detector (SNSPD), or Silicon Avalanche Photodiodes (Si APD).

In a preferred embodiment, the detection means of the free-space receiving module comprise a bell measurement setup for QKD (quantum key distribution) or for quantum teleportation or as a quantum repeater.

In a preferred embodiment, the storage means of the free-space receiving module comprise a quantum memory.

The advantage of a quantum memory is that the free-space receiver does not act as a trusted node because no classical measurement is done. The shorter signal wavelength according to the invention allows to interface directly with atomic systems-based quantum memory. For example, 780 nm can be coupled into a Rb vapor-based memory.

In a preferred embodiment, the fiber receiving module is an end-user for optical communication and/or QKD (quantum key distribution), preferably the fiber receiving module is arranged behind the fiber channel as an end-user, or behind a fiber network system as an end-user.

In a preferred embodiment, the fiber receiving module comprises one or more detection means, and/or a storage means.

In a preferred embodiment, the detection means of the fiber receiving module comprise one or more detectors to measure the photons in at least two mutually unbiased measurement bases, and/or to measure the photons in at least one or more orthogonal states.

In a preferred embodiment, the one or more detectors of the fiber receiving module are single photon detectors, preferably germanium (Ge), or silicon (Si), or germanium on silicon (Ge on Si) single-photon avalanche diode (SPAD), or Indium gallium arsenide (InGaAs/Inp) single photon detectors, or semiconductor-based single-photon avalanche diode (SPAD), or superconducting nanowire single-photon detector (SNSPD), or Silicon Avalanche Photodiodes (Si APD).

In a preferred embodiment, the detection means of the fiber receiving module comprise a bell measurement setup for QKD or for quantum teleportation or as a quantum repeater.

In a preferred embodiment, the storage means of the fiber receiving module comprise a quantum memory.

In a preferred embodiment, the free-space channel is a terrestrial free-space link, or a Satellite uplink, or a Satellite up- and downlink, or a Lunar up- or downlink.

Preferably the free-space link is between the source, located in the ground station, and the free-space receiver, located in a second ground station.

Preferably the satellite uplink is between the source, located in the ground station, and the free-space receiver, located on the satellite. Preferably the satellite up- and downlink is between the source, located in the ground station, and the free-space receiver, located in a second ground station, whereas the transmission is guided by reflection via a satellite from the entangled photon source to the second optical ground station.

Preferably the Lunar up- and/or downlink is between the source, located in the ground station, and the free-space receiver, located in a second ground station on the Moon, preferably that the transmission is guided via a satellite and/or the moon from the entangled photon source to the second optical ground station.

In a preferred embodiment, the free-space channel comprises a free-space transmission part, and preferably an optical sending module and/or an optical receiving module, and/or an optical reflection module.

In a preferred embodiment, the optical sending module is located near or behind the entangled photon source, and the optical receiving module is located near or in front of the free-space receiving module. Whereas behind means that the photons of the entangled photon source are guided from the source directly via the optical sending module to the free-space transmission part. The optical receiving module collects the photons which are guided by the optical receiving module directly to the free-space receiving module. In a preferred embodiment the optical reflection module is arranged in the free-space transmission part of the free space channel, preferably on a satellite or on a second ground station. The reflection means does not make a measurement on the photon but guides the photon towards the free-space receiving module.

In a preferred embodiment, the optical sending module and/or an optical receiving module, and/or the optical reflection module comprise an optical system, and/or a telescope, and/or an adaptive optics system, and/or a beacon laser, and/or an optical component to correct the polarization rotation due to the movement of a satellite, and/or a module to correct the Point-ahead angle (PAA), and/or a reflection means.

In a preferred embodiment, the reflection means comprise a relay mirror, in order to guide the signal photon with the reflection means to the free-space receiving module. Preferably the reflection means and/or the free-space receiving module is arranged on a satellite in geostationary orbit or low earth orbit or mid earth orbit, or on the moon, or on a second optical ground station.

The advantage of a reflection means is, that the satellite or the ground station with the reflection means has not to be trusted, meaning the satellite or the ground station with the reflection means act as an untrusted relay node, preferably for QKD. The reflection means has not to be trusted because no classical measurement is performed. The advantage of a relay node with a simple reflection means is that no electronical components for the production of entangled photons or for the detection of single photons have to be in space, and that the distance between the two transmission parties can be increased.

In a preferred embodiment, the adaptive optics system is located on the optical sending module and/or an optical receiving module, and/or the relay mirror side in order to pre-correct the disturbance in the free-space channel.

In a preferred embodiment, the adaptive optics system comprises a beacon laser on the receiving side and a correction means on the sending side of the free-space channel. In a preferred embodiment, the beacon laser is sent via the free-space transmission part and the optical sending module and the optical receiving module, whereas the beacon laser beam is coupled in and out by a dichroic mirror. In a preferred embodiment, the beacon laser is sent via the free-space transmission part via a separate adaptive optics lens system adjusted to guide the beacon laser beam through the free-space transmission part of the free-space channel. Transmission through atmosphere distorts the propagation wave front of light, which can be compensated with an adaptive optics system, making it easier to couple the sent photon it into a single mode fiber or to focus it on a detector area.

In a preferred embodiment, the entangled photon source is connected via free-space and/or a fiber with the optical sending module, and/or the optical receiving module is connected via free-space and/or a fiber with the receiving module, in order to guide the photons from the entangled photon source to the optical sending module, and/or the optical receiving module.

In a preferred embodiment, the fiber channel comprises a fiber and/or a fiber network.

In a preferred embodiment, the fiber channel comprises a fiber transmission part, and preferably a coupling module, preferably the fiber transmission part is the fiber and/or the fiber network.

In a preferred embodiment, the coupling module comprises fiber connector and/or a lens and/or a lens system to couple the entangled photon from the entangled photon source into the fiber or the fiber network.

In a preferred embodiment, the fiber network comprises two or more fiber receiving modules, and/or a wavelength division multiplexing (WDM) system to share the entangled photons between the entangled photon source and multiple fiber receiving modules.

In a preferred embodiment, the entangled photon source is arranged in a room or a building as an untrusted node, with access or connection to the optical sending module of the free-space channel and the coupling module of the fiber channel. The free-space channel and the fiber channel connect the fiber receiver and the free-space receiver with the entangled photon source, and whereas the fiber receiver and the free-space receiver are located outside the untrusted node, meaning outside the room or building of the entangled photon source.

In a preferred embodiment, the optical transmission system is an apparatus comprising an entangled photon source, a free-space receiver module, a fiber receiving module, a free-space channel and a fiber channel, whereas the entangled photon source generates entangled photon pairs, and whereas each entangled photon pair comprise a signal photon and an idler photon, and whereas the entangled photon source and the free-space receiving module are connected via the free-space channel, and whereas the entangled photon source and the fiber receiving module are connected via the fiber channel, and whereas the signal photon is sent via the free-space channel from the entangled photon source to the free-space receiving module, and the idler photon is sent via the fiber channel from the entangled photon source to the fiber receiving module, and wherein the signal and idler photon of an entangled photon pair have non-degenerate wavelengths, a signal photon wavelength and an idler photon wavelength.

In a preferred embodiment of the method, the signal photon and the idler photon of an entangled photon pair are generated in step i) with a shorter signal photon wavelength fₛ, preferably in nm, than the idler photon wavelength fᵢ, shorter in nm.

In a preferred embodiment, the method is used for optical communication or quantum key distribution (QKD).

In a preferred embodiment of the method a QKD (quantum key distribution) is established between the free-space receiver module and the fiber receiving module.

In a preferred embodiment of the method, entangled photon pairs generated in step i) are entangled in polarization, an/or time, and/or frequency, and/or orbital angular momentum (OAM) or spin angular momentum (SAM).

In a preferred embodiment of the method after step iii), the free-space receiver module and/or the fiber receiving module communicates the time, and/or the frequency and/or the polarization, and/or the orbital angular momentum (OAM) or the spin angular momentum (SAM) of one or more detected photons to the entangled photon source and/or the free-space receiver module and/or the fiber receiving module and/or a coincidence module, in order to detect coincidences of an entangled photon pair between the free-space receiver module and the fiber receiving module and/or to calculate the visibility and/or the quantum bit error rate (QBER), and/or to establish a QKD (quantum key distribution).

In a preferred embodiment of the method in an additional step iv), the free-space receiver module and the fiber receiving module communicate the detection from step iii) to the entangled photon source and/or the free-space receiver module and/or the fiber receiving module, and/or a coincidence module in order to detect coincidences of an entangled photon pair between the free-space receiver module and the fiber receiving module and to calculate the visibility and/or the quantum bit error rate (QBER), and/or to establish a QKD (quantum key distribution).

In a preferred embodiment of the method in step i), entangled photons are generated by the non-linear crystal in natural phase matching conditions or quasi-phase-matching condition, or birefringent phase matching. Phase-matching describes the wavelength of the signal and idler photon as a function of the non-linear medium, the pump beam wavelength and the desired signal and idler wavelengths. To generate signal and idler photon with different wavelength the pump beam and the nonlinear medium have to be chosen in dependence on the desired signal and idler photon wavelength. In a preferred embodiment of the method in step i) the non-linear crystal meets the natural phase matching conditions or quasi-phase-matching condition, or birefringent phase matching, in order to generate the signal and idler photon with non-degenerate wavelengths, a signal photon wavelength fₛ and an idler photon wavelength fᵢ, with fᵢ ≠ fₛ.

In a preferred embodiment of the method, the entangled photon pairs in step i) are generated by pumping a non-linear crystal with a pump beam, preferably are generated by spontaneous parametric down conversion (SPDC), preferably in a second-order non-linear crystal or are generated by spontaneous four wave mixing (SFWM), preferably in a third order non-linear crystal.

In a preferred embodiment of the method, the entangled photons are generated in step i) by the non-linear crystal in natural phase matching conditions or quasi-phase-matching condition. Non-linear crystals with modulated quadratic non-linear coefficients X⁽²⁾ are called quasi-phase-matching materials.

In a preferred embodiment of the method, the entangled photon source generates in step i) collinear or non-collinear photon pairs. Preferably the entangled photon source generates type 0 (HH), or type I (VV), or type II (HV) photon pairs.

Whereas the letters in the brackets describe the polarization of the signal and idler photon with H as horizontal polarization and V as vertical polarization.

In a preferred embodiment of the method, the entangled photon source comprises a pump beam, preferably generated in step i) by a laser, preferably the pump beam is in the range of 380nm to 430nm or 500nm to 550nm, preferably the pump beam is a pulsed or a continuous wave (CW) beam, preferably a pulsed or a continuous wave (CW) laser beam.

In a preferred embodiment of the method, the signal photon is generated in step i) with a signal photon wavelength fₛ is in the range of 450 nm to 1060 nm. The advantage of these range is the commercially available detectors.

In a preferred embodiment of the method, the signal photon is generated in step i) with a signal photon wavelength fₛ is in the range of 950 nm to 1650 nm. The advantage of this range is the commercially available detectors. In addition, this range has the advantage that the transmission in the atmosphere is high and the turbulence losses of the atmosphere are reduced.

In a preferred embodiment of the method, the signal photon is generated in step i) with a signal photon wavelength fₛ is in the range of 3 µm to 4µm. The advantage of this range is the high transmission through clouds in the atmosphere and the low

In a preferred embodiment of the method, the signal photon is generated in step i) with a signal photon wavelength fₛ is in the range of 500 nm to 600 nm, preferably 500 nm to 560 nm. The advantage of this range is that detectors with high detection efficiency and a high time resolution are available. For this range CMOS Sensors (Complementary metal-oxide-semiconductor) and avalanche-Photodiodes (APD) can be used and have a high detection efficiency and are developed for space application, meaning the avalanche-Photodiodes (APD) are space proofed. In a preferred embodiment of the method the signal photon is generated in step i) with a signal photon wavelength fₛ is in the range of 500 nm to 560 nm. The advantage of this range is the low diffraction for long free-space transmission channels.

In a preferred embodiment of the method, the signal photon is generated in step i) with a signal photon wavelength fₛ is in the range of 660 nm to 690 nm, or in the range of 770 nm to 790 nm, or in the range of 1000 nm to 1070 nm or in the range of 1540 nm to 1680 nm. The advantage of these ranges is the high transmission in the atmosphere. Besides the high transmission in the atmosphere wavelength in the range of 770 nm to 790 nm can be used for rubidium quantum memories. In addition, the ranges above 700 nm have the advantage that the Solar irradiance is lower, introducing less unwanted photons in the wavelength of the optical communication.

In a preferred embodiment of the method, the signal photon is generated in step i) with a signal photon wavelength fₛ is in the range of 530 nm to 650 nm. The advantage of this wavelength is the use for a quantum memory in a diamante.

In a preferred embodiment of the method, the signal photon is generated in step i) with a signal photon wavelength fₛ is in the range of 1040 nm to 1070 nm. The advantage of this range is that the laser communication in satellite is designed for these wavelengths.

The advantage of the non-degenerate signal and idler wavelengths is, that the lower signal wavelength has lower diffraction and a smaller beam size in the distance in the free-space transmission, and space proofed single photon avalanche diode (SPAD) detectors can be used for the detection. The advantage of the longer idler wavelength is the lower transmission loss in the fiber or fiber network.

In a preferred embodiment of the method, the idler photon is generated in step i) with an idler photon wavelength is in the range of 1200nm to 1700nm.

In a preferred embodiment of the method, the idler photon is generated in step i) with a wavelength in the optical telecom wavelength band, preferably in the original band (O-band) 1260 nm - 1360 nm, or in the extended band (E-band) 1360 nm - 1460 nm, or in the short band (S-band) 1460 nm - 1530 nm, or in the conventional band (C-band) 1530 nm - 1565 nm, or in the long band (L-band) 1565 nm - 1625 nm, or in the ultralong band (U-band) 1625 nm - 1675 nm.

In a preferred embodiment of the method in step i), the signal photon wavelength is chosen and/or generated depending on the beam width on the satellite and/or the transmission in the atmosphere (attenuation caused by the atmosphere absorption, scattering or turbulences or by the weather conditions), and/or the noise of light sources (sun or moon or terrestrial light sources), and/or the detection efficiency of the used detectors. Preferably the idler photon wavelength is chosen depending on the transmission in the fiber and/or multiplexing components in a fiber network, and/or the detection efficiency.

In a preferred embodiment of the method, the free-space receiving module in step ii) is a static receiver or a receiver in motion, preferably on a satellite or a movable second ground station. Preferably the free-space receiving module comprise optical free-space components and/or optical fiber components, in order to receive, guide and/or to detect the photon.

In a preferred embodiment of the method, the free-space receiving module and/or the fiber receiving module comprises for step iii) one or more detection means, and/or a storage means.

In a preferred embodiment of the method in step iii), the detection means comprise one or more detectors in order to measure the photons in at least two mutually unbiased measurement bases, and/or to measure the photons in at least one or more orthogonal states.

In a preferred embodiment of the method in step iii), the detection means detects the polarization and/or time, and/or frequency, and/or orbital angular momentum (OAM) or spin angular momentum (SAM) of the photons, preferably for a bell measurement and/or establish QKD (quantum key distribution) and/or for quantum teleportation and/or as a quantum repeater.

In a preferred embodiment of the method in step iii), the detection means comprise one or more detectors to measure the photons in at least two mutually unbiased measurement bases, and/or to measure the photons in at least one or more orthogonal states.

In a preferred embodiment of the method in step ii), the free-space channel is a terrestrial free-space link, or a Satellite uplink, or a Satellite up- and downlink, or a Lunar up- or downlink.

Preferably the free-space link is between the source, located in the ground station, and the free-space receiver, located in a second ground station. Preferably the satellite uplink is between the source, located in the ground station, and the free-space receiver, located on the satellite. Preferably the satellite up- and downlink is between the source, located in the ground station, and the free-space receiver, located in a second ground station, whereas the transmission is guided by reflection via a satellite from the entangled photon source to the second optical ground station. Preferably the Lunar up- and/or downlink is between the source, located in the ground station, and the free-space receiver, located in a second ground station on the Moon, preferably that the transmission is guided via a satellite and/or the moon from the entangled photon source to the second optical ground station.

In a preferred embodiment of the method in step ii), the signal photon is guided via an adaptive optics system to the free-space receiver and/or the signal photon pre-corrected for the transmission in the free-space channel by the adaptive optics system.

In a preferred embodiment, the optical sending module and/or an optical receiving module in step ii) correct the polarization rotation due to the movement of a satellite by an optical component and/or correct the Point-ahead angle (PAA) by an optical component.

In a preferred embodiment of the method in step ii), the signal photon is guided via the reflection means to the free-space receiving module, preferably the reflection means comprise a relay mirror. Preferably the reflection means and/or the free-space receiving module is arranged on a satellite in geostationary orbit or low earth orbit or mid earth orbit, or on the moon, or on a second optical ground station.

The advantage of a reflection means is that the satellite or the ground station with the reflection means has not to be trusted, meaning the satellite or the ground station with the reflection means act as an untrusted relay node, preferably for QKD. The reflection means has not to be trusted because no classical measurement is performed. The advantage of a relay node with a simple reflection mens is that no electronical components for the production of entangled photons or for the detection of single photons have to be in space, and that the distance between the two transmission parties can be increased.

In a preferred embodiment of the method in step ii), the idler photon is guided via the fiber network comprises two or more receivers, and/or a wavelength division multiplexing (WDM) system to share the entangled photons between multiple receivers.

The above and other aspects, features and advantages of the present invention will become more apparent from the following detailed description when taken in conjunction with the accompanying drawings.

### Brief Description of the Drawings:

- Fig. 1:: schematic diagram of the optical transmission system;
- Fig. 2:: first embodiment of the optical transmission system;
- Fig. 3:: second embodiment of the optical transmission system with an adaptive optics system and a fiber network;
- Fig. 4:: third embodiment of the optical transmission system with a relay mirror and a fiber network;
- Fig. 5:: schematic diagram of the optical transmission system between a satellite and a network receiver;
- Fig. 6:: schematic diagram of the optical transmission system between an optical ground station and a fiber network with more receivers;
- Fig. 7:: schematic diagram of the optical transmission system between an optical ground station via a relay mirror on a satellite and a fiber network with more receivers;

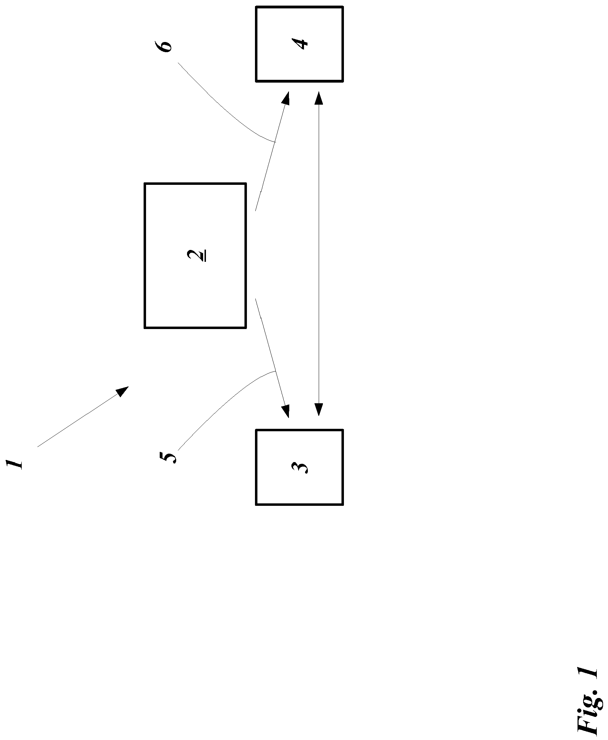

Fig. 1 shows a schematic diagram of the optical transmission system 1 comprising an entangled photon source 2, a free-space receiver module 3, a fiber receiving module 4, a free-space channel 5 and a fiber channel 6. The entangled photon source 2 is connected via the free-space channel 5 with the free-space receiving module 3. The entangled photon source 2 is connected via the fiber channel 6 with the fiber receiving module 4.

In the entangled photon source 2 entangled photon pairs are generated, whereas each entangled photon pair comprises a signal photon pₛ and an idler photon pᵢ with a signal photon wavelength fₛ and an idler photon wavelength fᵢ, whereas the signal photon wavelength fₛ and the idler photon wavelength fᵢ are non-degenerated wavelengths with fᵢ ≠ fₛ. The signal photon pₛ of the entangled photon pair is sent via the free-space channel 5 from the entangled photon source 2 to the free-space receiving module 3, and the idler photon pᵢ of the entangled photon pair is sent via the fiber channel 6 from the entangled photon source to the fiber receiving module 4.

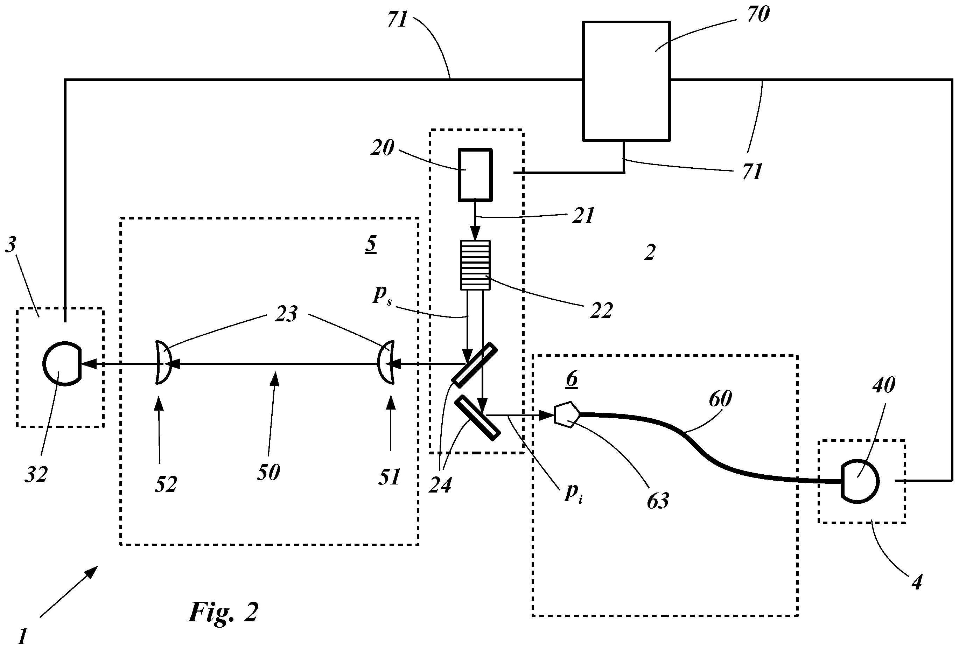

Fig. 2 shows a first embodiment of the optical transmission system 1 with the entangled photon source 2, the free-space channel 5, the fiber channel 6, the free-space receiving module 3, and the fiber receiving module 4.

The entangled photon source 2 comprises a laser 20 generating a pump beam 21 for pumping a nonlinear crystal 22 in order to generate the entangled photon pairs. The signal photon pₛ and the idler photon pᵢ are separated spatially in the example of fig. 2 by mirrors 24 and guided towards the free-space channel 5 and the fiber channel 6.

The free-space channel 5 comprises in the embodiment of fig. 2 a free-space transmission part 50, an optical sending module 51 with a lens 23, and an optical receiving module 52 with a lens 23. The transmitted signal photon pₛ is guided to the free-space receiving module 3 and detected by a free-space detection means 32.

The fiber channel 6 comprises in the embodiment of fig. 2 a fiber 60 and a fiber coupler 63. The idler photon pᵢ is guided via the fiber to the fiber receiving module 4 and detected by a fiber detection means 40.

In the example of fig. 2 the entangled photon source 2, the free-space receiving module 3 and the fiber receiving module 4 are connected via classical communication channels 71 with a coincidence logic 70 in order to calculate the visibility and/or the quantum bit error rate (QBER) and/or to establish quantum key distribution (QKD). Via the classical communication channels 71, the time and/or the frequency and/or the polarization, and/or the orbital angular momentum (OAM) or the spin angular momentum (SAM) of one or more detected photons can be communicated. The coincidence logic 70 can be located by the entangled photon source 2, the free-space receiving module 3, the fiber receiving module 4, or at a separate location.

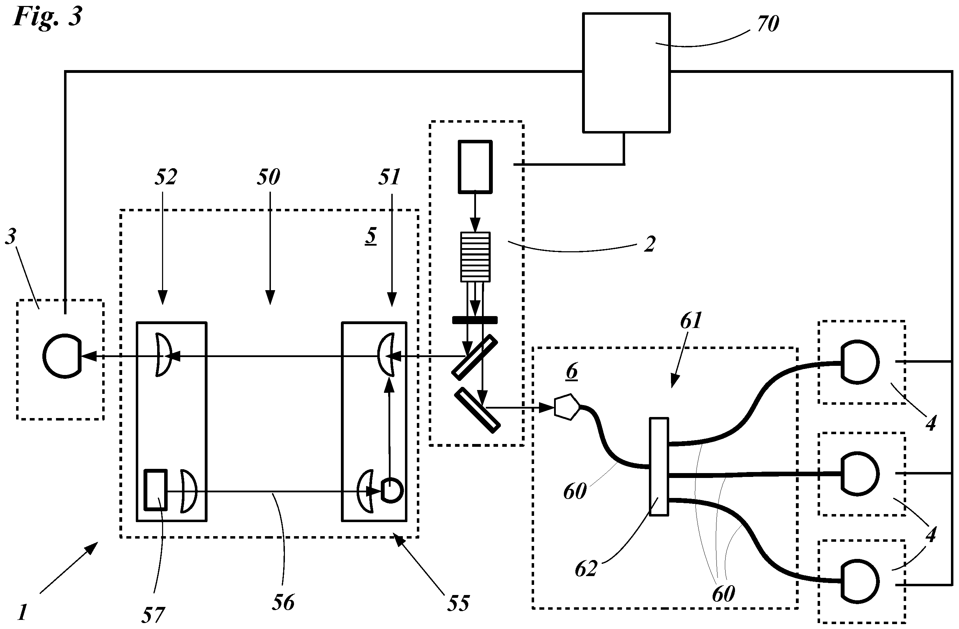

Fig. 3 shows a second embodiment of the optical transmission system 1. The fig. 3 differs from the figure 2 only in that the free space channel 5 comprises an adaptive optics module 55 located in the optical sending module 51 and the optical receiving module 52. From the optical receiving module 52 a beacon laser beam 56, generated by a beacon laser 57, is sent to the optical sending module 51 and is detected in the optical sending module 51 in order to use the information of the transmitted atmosphere for a pre-correction of the signal photon pₛ in the optical sending module 51. In addition, the fig. 3 differs from the figure 2 only in that the fiber channel 6 comprises a wavelength division multiplexing means 62 in a fiber network 61 connecting the entangled photon source 2 with a multitude of fiber receiving modules 4.

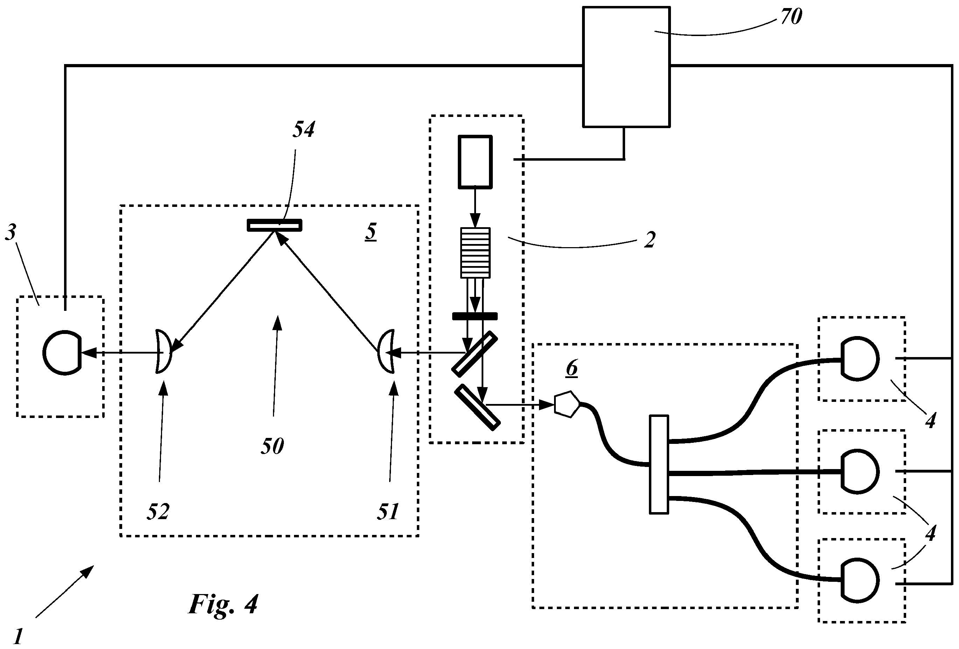

Fig. 4 shows a third embodiment of the optical transmission system 1. The fig. 4 differs from the figure 3 only in that the free space channel 5 comprises a relay module 54 in the free space part 50. The signal photon pₛ is sent from the optical sending module 51 to the relay module 54, is reflected on the relay module 54 and sent to the optical receiving module 52.

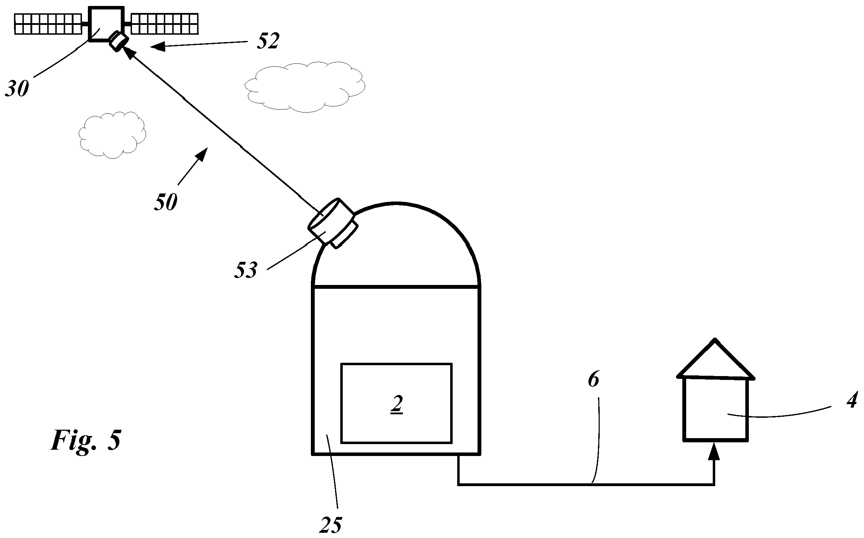

The fig. 5, 6 and 7 show different schematic diagrams of the optical transmission system 1. The entangled photon source is located in a first optical ground station 25. The first optical ground station 25 comprises the entangled photon source 2 and the optical sending module 51 with a telescope 53. The signal photon pₛ is sent in a satellite uplink via the telescope 53 and the free space part 50 towards a satellite 30 comprising the optical receiving module 52. The fiber receiving module 4 is connected via the fiber channel 6 with the first optical ground station 25.

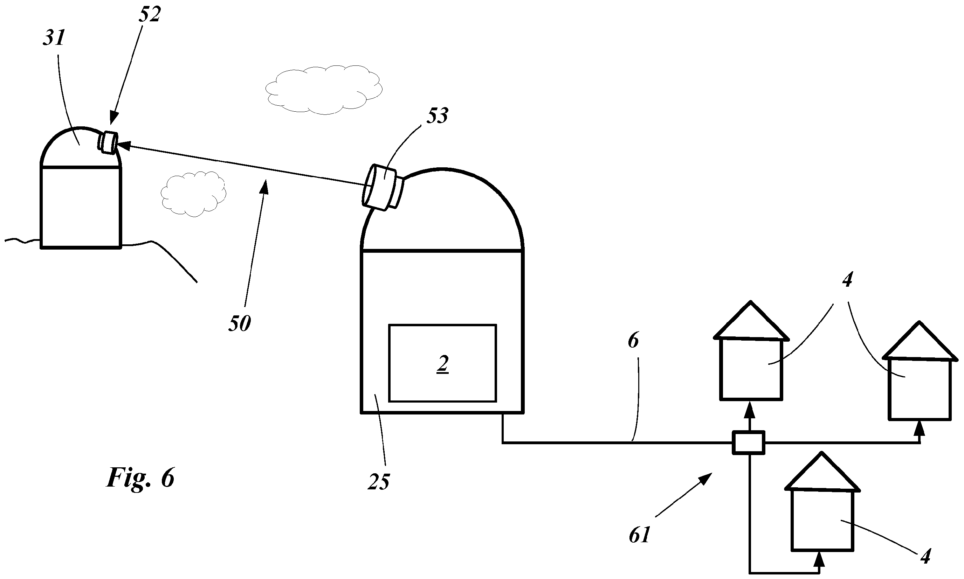

Fig. 6 differs from fig. 5 only in that the signal photon pₛ is sent to a second ground station 31 on the earth via a terrestrial free-space link. The terrestrial free-space link comprises the telescope 53 in the optical sending module 51, the free space part 50 and the optical receiving module 52. In the second ground station 31 the optical receiving module 52 and the free-space detection means 32 are located. In addition, the first optical ground station 25 is connected via a fiber network 61 with a multitude of fiber receiving modules 4.

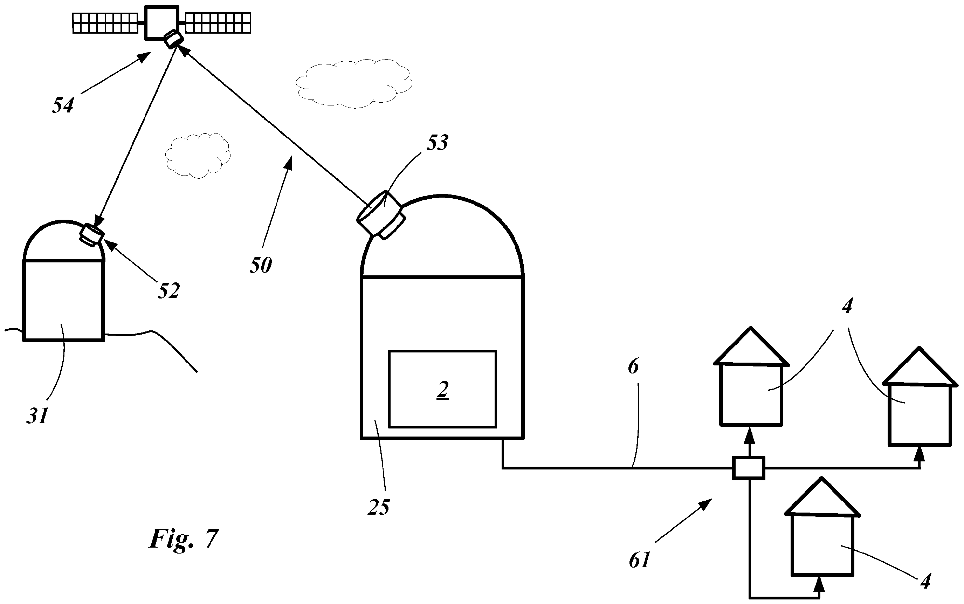

Fig. 7 differs from fig. 6 only in that the signal photon pₛ is sent to the second ground station 31 on the earth via a relay module 54 on the satellite forming a satellite up- and downlink.

### Reference signs:

- 1: optical transmission system
- 2: entangled photon source
- 3: free-space receiving module
- 4: fiber receiving module
- 5: free-space channel
- 6: fiber channel

- 20: laser
- 21: pump beam
- 22: nonlinear crystal
- 23: lens
- 24: mirror
- 25: first optical ground station

- 30: satellite
- 31: second ground station
- 32: free-space detection means

- 40: fiber detection means

- 50: free space part
- 51: optical sending module
- 52: optical receiving module
- 53: telescope
- 54: relay module
- 55: adaptive optics module
- 56: beacon laser beam
- 57: beacon laser
- 60: fiber
- 61: fiber network
- 62: wavelength division multiplexing means
- 63: fiber coupler

- 70: coincidence logic
- 71: classical communication channel

- pₛ: signal photon
- pᵢ: idler photon

## Claims

1. Optical transmission system (1), preferably for single photons or quantum states, comprising an entangled photon source (2), a free-space receiver module (3), a fiber receiving module (4), a free-space channel (5) and a fiber channel (6),
whereas the entangled photon source (2) generates entangled photon pairs, and whereas each entangled photon pair comprises a signal photon and an idler photon, and
whereas the entangled photon source (2) and the free-space receiving module (3) are connected via the free-space channel (5), and
whereas the entangled photon source (2) and the fiber receiving module (4) are connected via the fiber channel (6), and
whereas the signal photon is sent via the free-space channel (5) from the entangled photon source (2) to the free-space receiving module (3), and the idler photon is sent via the fiber channel (6) from the entangled photon (2) source to the fiber receiving module (4),
**characterized in that**
the signal and idler photon of the entangled photon pair have non-degenerate wavelengths, a signal photon wavelength fₛ and an idler photon wavelength fᵢ, with fᵢ ≠ fₛ.

2. Optical transmission system (1) according to claim 1,
**characterized in that**
the entangled photon source is an untrusted node, preferably for optical communication and/or quantum key distribution, preferably the free-space channel and the fiber channel are linked via the untrusted node.

3. Optical transmission system (1) according to claim 1 or 2, **characterized in that**
the optical transmission system (1) is used and/or capable for optical communication or quantum key distribution.

4. Optical transmission system (1) according to claims 1 to 3, **characterized in that**
entangled photon pairs are entangled in polarization, an/or time, and/or frequency, and/or orbital angular momentum (OAM) or spin angular momentum (SAM).

5. Optical transmission system (1) according to claims 1 to 4, **characterized in that**
the free-space receiver module (3) and/or the fiber receiving module (4) communicates the time, and/or the frequency and/or the polarization, and/or the orbital angular momentum (OAM) and/or the spin angular momentum (SAM) of one or more detected photons to the entangled photon source (2) and/or the free-space receiver module (3) and/or the fiber receiving module (4) and/or a coincidence module, in order to detect coincidences of an entangled photon pair between the free-space receiver module (3) and the fiber receiving module (4) and/or to calculate the visibility and/or the quantum bit error rate (QBER) and/or to establish a QKD (Quantum key distribution).

6. Optical transmission system (1) according to claims 1 to 5, **characterized in that**
the entangled photon pairs are generated by pumping a non-linear crystal (22) with a pump beam (21), preferably are generated by spontaneous parametric down conversion (SPDC), preferably in a second-order non-linear crystal or are generated by spontaneous four wave mixing (SFWM), preferably in a third order non-linear crystal.

7. Optical transmission system (1) according to claim 1 to 6, **characterized in that**
the signal photon wavelength fₛ is in the range of 450 nm to 1060 nm, or in the range of 950 nm to 1650 nm, or in the range of 3 µm to 4 µm.

8. Optical transmission system (1) according to claim 1 to 7, **characterized in that**
the idler photon wavelength fᵢ is in the range of 1200nm to 1700nm, preferably in the original band (O-band) 1260 nm - 1360 nm, or in the extended band (E-band) 1360 nm - 1460 nm, or in the short band (S-band) 1460 nm - 1530 nm, or in the conventional band (C-band) 1530 nm - 1565 nm, or in the long band (L-band) 1565 nm - 1625 nm, or in the ultralong band (U-band) 1625 nm - 1675 nm.

9. Optical transmission system (1) according to claim 1 to 8, **characterized in that**
the free-space receiving module (3) is an end-user for optical communication and/or QKD (quantum key distribution), preferably is arranged on a satellite (30), preferably in geostationary orbit or low earth orbit or mid earth orbit, or is arranged on the moon, or is arranged on a second terrestrial optical ground station (31), whereas preferably the free-space receiving module (3) comprises one or more detection means (32), and/or a storage means.

10. Optical transmission system (1) according to claim 1 to 9, **characterized in that**
fiber receiving module (4) is an end-user for optical communication and/or QKD (quantum key distribution), preferably the fiber receiving (4) module is arranged behind the fiber channel (6) as an end-user, or behind a fiber network system (61) as an end-user, whereas preferably the fiber receiving module (4) comprises one or more detection means (40), and/or a storage means.

11. Optical transmission system (1) according to claims 1 to 10, **characterized in that**
the free-space channel (5) is a terrestrial free-space link, or a Satellite uplink, or a Satellite up- and downlink, or a Lunar up- or downlink, preferably the free-space channel (5) comprises a free-space transmission part (50), and preferably an optical sending module (51) and/or an optical receiving module (52), and/or an optical reflection or relay module (54).

12. Optical transmission system (1) according to claim 11, **characterized in that**
the optical sending module (51) and/or the optical receiving module (52), and/or the optical reflection or relay module (54) comprise an optical system, and/or a telescope (53), and/or an adaptive optics system (55), and/or a beacon laser (57), and/or an optical component to correct the polarization rotation due to the movement of a satellite (30), and/or a module to correct the Point-ahead angle (PAA), and/or a reflection means.

13. Optical transmission system (1) according to claims 1 to 12, **characterized in that**
the fiber channel (6) comprises a fiber transmission part, and preferably a coupling module (63), whereas the fiber transmission part is a fiber (60) and/or a fiber network (61), preferably that the fiber network (61) comprises a wavelength division multiplexing (WDM) system to share the entangled photons between multiple fiber receiving modules (4).

14. Method for an optical transmission, preferably for transmission of single photons or quantum states, with the steps
i) generation of entangled photon pairs with an entangled photon source (2), whereas each entangled photon pair comprise a signal photon pₛ and an idler photon pᵢ,
ii) guiding the signal photon pₛ via a free-space channel (5) to a free-space receiving module (3), and guiding the idler photon pᵢ via a fiber channel (6) to a fiber receiving module (4),
iii) detection or storage of the signal photon pₛ in the free-space receiving module (3) and detection or storage of the idler photon pᵢ in the fiber receiving module (4),
**characterized in that**
the signal and idler photons in step i) of an entangled photon pair are generated with non-degenerate wavelengths, a signal photon wavelength fₛ and an idler photon wavelength fᵢ, with fᵢ ≠ fₛ.

15. Method for optical transmission according to claim 14,
**characterized in that**
iv) the free-space receiver module (3) and the fiber receiving module (4) communicate the detection from step iii) to the entangled photon source (2) and/or the free-space receiver module (3) and/or the fiber receiving module (4), and/or a coincidence module in order to detect coincidences of an entangled photon pair between the free-space receiver module (3) and the fiber receiving module (4) and/or to calculate the visibility, and/or to establish a QKD (quantum key distribution).
